(19) Europäisches Patentamt
European Patent Office
Office européen des brevets

(11) Veröffentlichungsnummer: **0 199 414 B1**

# (12) EUROPÄISCHE PATENTSCHRIFT

(45) Veröffentlichungstag der Patentschrift: **02.10.91**

(51) Int. Cl.5: **G02F 1/09**, H01F 10/24, H01F 10/08

(21) Anmeldenummer: **86200645.9**

(22) Anmeldetag: **16.04.86**

## (54) Planarer optischer Wellenleiter und Verfahren zu seiner Herstellung.

(30) Priorität: **20.04.85 DE 3514413**

(43) Veröffentlichungstag der Anmeldung: **29.10.86 Patentblatt 86/44**

(45) Bekanntmachung des Hinweises auf die Patenterteilung: **02.10.91 Patentblatt 91/40**

(84) Benannte Vertragsstaaten: **DE FR GB**

(56) Entgegenhaltungen:

**PATENT ABSTRACTS OF JAPAN, Band 3, Nr. 18 (E-91), 16. Februar 1979 & & JP-A-53-145 653**

**JOURNAL OF CRYSTAL GROWTH, Band 52, 1981, Seiten 722-728, North-Holland Publishing Co.; W. TOLKSDORF et al.: "Compositional inhomogeneities along the growth direction of substituted yttrium iron garnet epilayers"**

(73) Patentinhaber: **Philips Patentverwaltung GmbH**
**Wendenstrasse 35 Postfach 10 51 49**
**W-2000 Hamburg 1(DE)**
(84) Benannte Vertragsstaaten: **DE**

Patentinhaber: **N.V. Philips' Gloeilampenfabrieken**
**Groenewoudseweg 1**
**NL-5621 BA Eindhoven(NL)**
(84) Benannte Vertragsstaaten: **FR GB**

(72) Erfinder: **Tolksdorf, Wolfgang, Prof.-Dr. Dipl.-Chem.**
**Königsberger Strasse 34**
**W-2082 Tornesch(DE)**
Erfinder: **Bartels, Inske**
**Am Wall 5**
**W-2080 Pinneberg(DE)**

**EP 0 199 414 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

APPLIED PHYSICS LETTERS, Band 48, Nr. 8, Februar 1986, Seiten 508-510, American Institute of Physics; R. WOLFE et al.: "Single mode magneto-optic waveguide films"

Erfinder: **Dammann, Hans Otto Bernhard, Dr. Dipl.-Phys.**
**Eichenstrasse 27**
**W-2081 Tangstedt(DE)**
Erfinder: **Klages, Claus-Peter, Dr. Dipl.-Chem.**
**Kanalstrasse 18**
**W-2000 Hamburg 75(DE)**
Erfinder: **Pross, Elke, Dipl.-Phys.**
**Scheelring 14**
**W-2000 Hamburg 61(DE)**

(74) Vertreter: **Nehmzow-David, Fritzi-Maria et al**
**Philips Patentverwaltung GmbH Wendenstrasse 35 Postfach 10 51 49**
**W-2000 Hamburg 1(DE)**

## Beschreibung

Die Erfindung bezieht sich auf einen planaren optischen Wellenleiter mit einer Kristalleinheit, bestehend aus einem nicht magnetischen Substrat mit einer ersten, auf dem Substrat epitaktisch angebrachten magnetooptischen Schicht und einer zweiten, auf der ersten magnetooptischen Schicht epitaktisch angebrachten magnetooptischen Schicht, wobei beide magnetooptische Schichten aus einem Material auf Basis von Eisengranat bestehen und wobei die zweite magnetooptische Schicht einen Brechungsindex $n_2$ hat, der etwa um den Betrag $1x10^{-3}$ bis $1x10^{-2}$ größer ist als der Brechungsindex $n_1$ der ersten magnetooptischen Schicht.

Die Erfindung bezieht sich weiter auf ein Verfahren zur Herstellung eines derartigen optischen Wellenleiters und auf seine Verwendung.

In der optischen Nachrichtenübertragung mittels Lichtleitfasern aus Glas werden Einweg-Wellenleiter zum Schutz der dort eingesetzten Halbleiter-Laserdioden vor aus der angekoppelten Strecke zurückreflektiertem Licht als optische Isolatoren oder gegebenenfalls auch als optische Zirkulatoren eingesetzt, wobei die nichtreziproken Eigenschaften von magnetooptischen Materialien aufgrund der Faraday-Drehung ausgenutzt werden.

Planare optische Einweg-Wellenleiter, die durch epitaktisch auf einem Substrat angebrachte Schichten aus magnetooptischem Material realisiert werden, müssen dabei in der Schichtdicke der Strahlung leitenden Schicht an die Abmessungen der anzukoppelnden Lichtleitfasern angepaßt sein; Monomode-Lichtleitfasern haben z.B. einen Kerndurchmesser im Bereich von 5 bis 10$\mu$m, d.h., die Schichtdicke der Strahlung leitenden Schicht eines Monomode-Wellenleiters muß auch im Bereich von 5 bis 10$\mu$m liegen.

Schichten dieser Abmessungen lassen sich durch Flüssigphasen-Epitaxie (LPE) aus sehr verdünnten schmelzflüssigen Lösungen darstellen, bei denen das Lösungsmittel üblicherweise aus einem Gemisch von PbO und $B_2O_3$ besteht. Als Material für die magnetooptische Schicht kommt z.B. Yttrium-Eisen-Granat ($Y_3Fe_5O_{12}$), als Material für das Substrat, auf dem derartige Schichten epitaktisch aufwachsen, kommt z.B. Gadolinium-Gallium-Granat ($Gd_3Ga_5O_{12}$) in Form von im Handel erhältlichen 0,5 mm dicken (111)-Einkristallscheiben in Betracht. Für die magnetooptischen Schichten sind auch andere Eisen-Granate geeignet, wie z.B. $Gd_3Fe_5O_{12}$ oder auch Wismut-substituierte Eisen-Granate.

In der optischen Nachrichtenübertragung mittels Lichtleitfasern wird für eine hochratige Datenübertragung die Monomode-Technik angewendet. Der eingangs genannte planare optische Wellenleiter arbeitet mit zwei magnetooptischen Eisen-Granat-Schichten mit einem kleinen Brechungsindexsprung zwischen den beiden magnetooptischen Schichten, wodurch die zweite, an die erste auf dem Substrat angebrachte Schicht angrenzende Eisen-Granat-Schicht bei einer Dicke von 5 bis 10$\mu$m ein Monomode-Wellenleiter ist.

Wegen des relativ großen Brechungsindexunterschiedes zwischen dem Substrat und der ersten magnetooptischen Schicht sind in der gesamten magnetooptischen Doppelschicht zusätzlich weitere Moden ausbreitungsfähig. Für einen optimalen Monomodebetrieb ist dieser Effekt unerwünscht.

Der Erfindung liegt daher die Aufgabe zugrunde, den eingangs genannten planaren optischen Wellenleiter so zu verbessern, daß die Ausbreitung unerwünschter Moden mit Sicherheit verhindert wird.

Diese Aufgabe wird erfindungsgemäß dadurch gelöst, daß zwischen dem Substrat und der ersten magnetooptischen Schicht eine Strahlung aus dem Wellenlängenbereich $1,0 \leqq \lambda \leqq 2,5$ $\mu$m absorbierende Schicht aus einem Material auf Basis von Eisen-Granat angebracht ist, deren Brechungsindex $n_A$ größer als der der ersten magnetooptischen Schicht ist.

Ein Verfahren zur Herstellung eines solchen planaren optischen Wellenleiters ist dadurch gekennzeichnet, daß auf einem nichtmagnetischen Substrat eine Strahlung aus dem Wellenlängenbereich $1,0 \leqq \lambda \leqq 2,5$ $\mu$m absorbierende Schicht aus einem Material auf Basis von Eisen-Granat epitaktisch abgeschieden und auf dieser Absorptionsschicht zwei magnetooptische Schichten mit einem Brechungsindexunterschied $\Delta n$ im Bereich von $1x10^{-3}$ bis $1x10^{-2}$ epitaktisch abgeschieden werden, wobei der Absorptionsschicht durch Einbau von Strahlung aus dem Wellenlängenbereich $1,0 \leqq \lambda \leqq 2,5\mu$m absorbierenden Ionen in das Granatgitter und durch Wahl der Zusammensetzung ein Brechungsindex $n_A$ erteilt wird, der größer ist als der Brechungsindex $n_1$ der ersten, an die Absorptionsschicht angrenzenden magnetooptischen Schicht.

Der Erfindung liegt die Erkenntnis zugrunde, daß die Ausbreitung unerwünschter Moden verhindert werden kann, wenn zwischen dem Substrat und der magnetooptischen Doppelschicht eine Strahlung aus dem Spektralbereich $1,0 \leqq \lambda \leqq 2,5\mu$m absorbierende Zwischenschicht angebracht wird, deren Brechungsindex $n_A$ geringfügig größer als der Brechungsindex $n_1$ der ersten, an die Absorptionsschicht angrenzenden magnetooptischen Schicht ist. Auf diese Weise werden weitere, für einen Monomodebetrieb nicht erwünschte Moden beim Durchlaufen der Absorptionsschicht stark gedämpft, womit ihre Ausbreitung unterdrückt wird. Es wurde gefunden, daß insbesondere $Co^{III}$ und/oder $Co^{II}$ in Kombination mit vierwertigen Ionen wie $Si^{IV}$, $Ge^{IV}$, $Ti^{IV}$ und/oder $Zr^{IV}$ den Brechungsindex der Absorptionsschicht verändern und absorbierend

auf Strahlung aus dem Wellenlängenbereich 1,0 ≦ λ ≦ 2,5 μm wirken.

Nach einer weiteren vorteilhaften Ausgestaltung der Erfindung ist im Material der Absorptionsschicht im Granatgitter mindestens ein Substituent in Form eines Kations, das dodekaedrische, oktaedrische und/oder tetraedrische Gitterplätze besetzen kann, vorhanden, wobei nach einer weiteren vorteilhaften Ausgestaltung der Erfindung die Absorptionsschicht eine Zusammensetzung der allgemeinen Formel $Y_3Fe_{5-x-y-z}A_xD_yM_zO_{12}$ hat, worin

$A = Co^{III}$, $D = Co^{II}$ und $M = Si^{IV}$, $Ge^{IV}$, $Ti^{IV}$, $Zr^{IV}$ und/oder Mischungen dieser Ionen sind, mit $0 \leqq x \leqq 0{,}3; 0 \leqq y \leqq 0{,}3; z \geqq y; 0 \leqq y + z \leqq 0{,}6; x + y + z \leqq 0{,}6; x + y > 0$ und worin z = 0 ist, wenn y = 0 ist.

Nach weiteren vorteilhaften Ausgestaltungen der Erfindung werden auf dem Substrat ferrimagnetische Absorptionsschichten der Formeln

$Y_3Fe_{4,9}Co_{0,1}O_{12}$

$Y_3Fe_{4,939}Co_{0,018}Ge_{0,042}O_{12}$ oder

$Y_3Fe_{4,73}Co_{0,12}Si_{0,15}O_{12}$

abgeschieden. Die Herstellung einer Absorptionsschicht der Zusammensetzung $Y_3Fe_{4,9}Co_{0,1}O_{12}$ wird als Ausführungsbeispiel beschrieben.

Es ist hierbei anzumerken, daß, obwohl ein Lösungsmittel in Form von PbO und $B_2O_3$ eingesetzt wurde, der Boreinbau in die anwachsende Schicht so gering ist, daß er zu vernachlässigen ist.

Die Figuren zeigen

Figur 1 Prinzipdarstellung eines planaren optischen Einwegwellenleiters nach der Erfindung,

Figuren 2 bis 4 Darstellung des Absorptionsverhaltens von Absorptionsschichten gemäß der Erfindung für Strahlung aus dem nahen Infrarotbereich.

In Figur 1 ist ein planarer optischer Wellenleiter 1 mit einem Substrat 3 aus $Gd_3Ga_5O_{12}$ dargestellt, wobei das Substrat aus einer 500μm dicken (111)-orientierten Einkristallscheibe besteht. Als ferrimagnetische Absorptionsschicht 5 ist eine epitaktische $Y_3Fe_{4,9}Co_{0,1}O_{12}$-Schicht angebracht mit einem Brechungsindex $n_A$ = 2,224. Als erste magnetooptische Schicht 7 ist eine epitaktische $Y_{2,934}Pb_{0,066}Fe_5O_{12}$- Schicht angebracht mit einem Brechungsindex $n_1$ = 2,220.

Als zweite magnetooptische Schicht 9 ist eine epitaktische $Y_{2,91}Pb_{0,09}Fe_5O_{12}$-Schicht angebracht mit einem Brechungsindex $n_2 = 2{,}224$. Der Brechungsindexunterschied $\Delta n = n_2 - n_1$ beträgt $4{,}0 \times 10^{-3}$. Der Brechungsindexunterschied zwischen der Absorptionsschicht 5 und der ersten magnetooptischen Schicht 7 beträgt $n_A - n_1 = 4 \times 10^{-3}$.

Zur Herstellung sowohl der magnetooptischen Schichten 7,9 als auch der ferrimagnetischen Absorptionsschicht 5 wurde das z.B. aus Journal of Crystal Growth 52 (1981) Seiten 722 bis 728 bekannte Flüssigphasenepitaxieverfahren mit horizontal gehalterten 0,5 mm dicken (111)-orientierten $Gd_3Ga_5O_{12}$-Einkristallscheiben eines Durchmessers von 30 mm als Substrat 3 benutzt. Für die Herstellung der magnetooptischen Schichten 7 und 9 wurde entweder eine Schmelze I oder eine Schmelze II eingesetzt. Für die Herstellung der ferrimagnetischen Absorptionsschicht 5 wurde eine Schmelze III eingesetzt.

Die Schmelzen I, II und III hatten, bezogen auf die eingesetzten Oxide, folgende Zusammensetzung (Angaben in Gew.%):

| | I | II | III |
|---|---|---|---|
| PbO | 90,88 | 87,14 | 89,27 |
| $B_2O_3$ | 1,99 | 3,40 | 1,95 |
| $Fe_2O_3$ | 6,46 | 8,70 | 6,35 |
| $Y_2O_3$ | 0,67 | 0,76 | 0,66 |
| $Co_2O_3$ | - | - | 1,77 |

Die Zusammensetzungen (Anteil der Kationen in der Schmelze) der Schmelzen I bis III gehen aus der nachfolgenden Tabelle hervor:

Tabelle 1

| Schmelzzusammensetzung | | | |
|---|---|---|---|
| Kationen | Anteil der Kationen in der Schmelze [Atom-%] | | |
| | Schmelze I | Schmelze II | Schmelze III |
| Pb | 73,87 | 64,66 | 71,08 |
| B | 10,37 | 16,18 | 9,98 |
| Fe | 14,68 | 18,05 | 14,12 |
| Y | 1,08 | 1,11 | 1,03 |
| Co | - | - | 3,79 |

Aus der in der Tabelle 1 in ihrer Zusammensetzung angegebenen Schmelze III wurde die ferrimagnetische Absorptionsschicht 5 bei einer Wachstumstemperatur der Schmelze Tg = 865°C mit einer Schichtdicke d = 6µm epitaktisch abgeschieden. Sie hatte einen Brechungsindex $n_A = 2{,}224$. Die Absorption dieser Schicht für Strahlung des Wellenlängenbereiches $1{,}0 \leqq \lambda \leqq 2{,}0$µm geht aus Figur 2 hervor; sie reichte aus, um Multimode-Wellenleitung in der auf der ferrimagnetischen Absorptionsschicht 5 epitaktisch aufgewachsenen magnetooptischen Doppelschicht 7,9 zu unterdrücken.

Absorptionsmessungen für Strahlung des Wellenlängenbereiches $1{,}0 \leqq \lambda \leqq 2{,}5$µm wurden ebenfalls mit

Schichten der Zusammensetzungen
$Y_3Fe_{4,939}Co_{0,018}Ge_{0,042}O_{12}$ (Fig. 3)
und
$Y_3Fe_{4,73}Co_{0,12}Si_{0,15}O_{12}$ (Fig. 4)
und einer Schichtdicke d ≈ 100µm durchgeführt (vergleiche Figuren 3 und 4). Mit α ist der Absorptionskoeffizient für die vorliegenden Schichten bezeichnet.

## Patentansprüche

1. Planarer optischer Wellenleiter mit einer Kristalleinheit, bestehend aus einem nichtmagnetischen Substrat (3) mit einer ersten, auf dem Substrat epitaktisch angebrachten magnetooptischen Schicht (7) und einer zweiten, auf der ersten magnetooptischen Schicht epitaktisch angebrachten magnetooptischen Schicht (9), wobei beide magnetooptische Schichten (7,9) aus einem Material auf Basis von Eisen-Granat bestehen und wobei die zweite magnetooptische Schicht einen Brechungsindex $n_2$ hat, der etwa um den Betrag $1x10^{-3}$ bis $1x10^{-2}$ größer ist als der Brechungsindex $n_1$ der ersten magnetooptischen Schicht,
dadurch gekennzeichnet,
daß zwischen dem Substrat (3) und der ersten magnetooptischen Schicht (7) eine Strahlung aus dem Wellenlängenbereich $1,0 \leqq \lambda \leqq 2,5$ µm absorbierende Schicht (5) aus einem Material auf Basis von Eisen-Granat angebracht ist, deren Brechungsindex $n_A$ größer als der Brechungsindex der ersten magnetooptischen Schicht ist.

2. Planarer optischer Wellenleiter nach Anspruch 1, dadurch gekennzeichnet,
daß das Material für die magnetooptischen Schichten eine Zusammensetzung gemäß der allgemeinen Formel $Y_{3-x}Pb_xFe_5O_{12}$ hat mit x = 0,007 bis 0,025 für die der Absorptionsschicht (5) unmittelbar benachbarte erste magnetooptische Schicht (7) und mit x=0,02 bis 0,04 für die auf der ersten magnetooptischen Schicht angebrachte zweite magnetooptische Schicht (9).

3. Planarer optischer Wellenleiter nach den Ansprüchen 1 und 2, dadurch gekennzeichnet,
daß im Material der Absorptionsschicht (5) im Granatgitter mindestens ein Substituent in Form eines Kations, das dodekaedrische, oktaedrische und/oder tetraedrische Gitterplätze besetzen kann, vorhanden ist.

4. Planarer optischer Wellenleiter nach Anspruch 3, dadurch gekennzeichnet,
daß die Absorptionsschicht (5) eine Zusammensetzung der allgemeinen Formel
$Y_3Fe_{5-x-y-z}A_xD_yM_zO_{12}$ hat, worin
$A = Co^{III}$,
$D = Co^{II}$,
$M = Si^{IV}, Ge^{IV}, Ti^{IV}, Zr^{IV}$ und/oder Mischungen dieser Ionen mit

$$0 \leq x \leq 0,3$$
$$0 \leq y \leq 0,3$$
$$z \geq y$$
$$0 \leq y+z \leq 0,6$$
$$x+y+z \leq 0,6$$
$$x+y > 0$$

und worin z=0 ist, wenn y=0 ist.

5. Planarer optischer Wellenleiter nach Anspruch 4, dadurch gekennzeichnet,
daß die Absorptionsschicht (5) eine Zusammensetzung gemäß der Formel $Y_3Fe_{4,9}Co_{0,1}O_{12}$ hat.

6. Planarer optischer Wellenleiter nach Anspruch 4, dadurch gekennzeichnet,
daß die Absorptionsschicht (5) eine Zusammensetzung gemäß der Formel $Y_3Fe_{4,939}Co_{0,018}Ge_{0,042}O_{12}$ hat.

7. Planarer optischer Wellenleiter nach Anspruch 4, dadurch gekennzeichnet, daß die Aborptionsschicht (5) eine Zusammensetzung gemäß der Formel $Y_3Fe_{4,73}Co_{0,12}Si_{0,15}O_{12}$ hat.

8. Planarer optischer Wellenleiter nach einem der vorhergehenden Ansprüche, dadurch gekennzeichnet, daß die Absorptionsschicht (5) eine Schichtdicke ≦, 100$\mu$m hat.

9. Planarer optischer Wellenleiter nach einem der vorhergehenden Ansprüche, dadurch gekennzeichnet, daß das Substrat (3) eine Zusammensetzung gemäß der Formel $Gd_3Ga_5O_{12}$ hat.

10. Verfahren zur Herstellung eines planaren optischen Wellenleiters nach den Ansprüchen 1 bis 9, dadurch gekennzeichnet,
daß auf einem nichtmagnetischen Substrat eine Strahlung aus dem Wellenlängenbereich $1{,}0 \leq \lambda \leq 2{,}5 \mu m$ absorbierende Schicht aus einem Material auf Basis von Eisen-Granat epitaktisch abgeschieden und auf dieser Absorptionsschicht zwei magnetooptische Schichten mit einem Brechungsindexunterschied $\Delta n$ im Bereich von $1 \times 10^{-3}$ bis $1 \times 10^{-2}$ epitaktisch abgeschieden werden, wobei der Absorptionsschicht durch Einbau von Strahlung aus dem Wellenlängenbereich $1{,}0 \leq \lambda \leq 2{,}5 \mu m$ absorbierenden Ionen in das Granatgitter und durch Wahl der Zusammensetzung ein Brechungsindex $n_A$ erteilt wird, der größer ist als der Brechungsindex $n_1$ der ersten, an die Absorptionsschicht angrenzenden magnetooptischen Schicht.

11. Verfahren nach Anspruch 10, dadurch gekennzeichnet,
daß auf dem Substrat eine Absorptionsschicht einer Zusammensetzung der allgemeinen Formel $Y_3Fe_{5-x-y-z}A_xD_yM_zO_{12}$ abgeschieden wird, worin
$A = Co^{III}$,
$D = Co^{II}$,
$M = Si^{IV}, Ge^{IV}, Ti^{IV}, Zr^{IV}$ und/oder Mischungen dieser Ionen mit

$$0 \leq x \leq 0{,}3$$
$$0 \leq y \leq 0{,}3$$
$$z \geq y$$
$$0 \leq y+z \leq 0{,}6$$
$$x+y+z \leq 0{,}6$$
$$x+y > 0$$

und worin $z = 0$ ist, wenn $y = 0$ ist.

12. Verfahren nach Anspruch 11, dadurch gekennzeichnet,
daß auf dem Substrat eine Absorptionsschicht der Formel $Y_3Fe_{4,9}Co_{0,1}O_{12}$ abgeschieden wird.

13. Verfahren nach Anspruch 11, dadurch gekennzeichnet,
daß auf dem Substrat eine Absorptionsschicht der Formel $Y_3Fe_{4,939}Co_{0,018}Ge_{0,042}O_{12}$ abgeschieden wird.

14. Verfahren nach Anspruch 11, dadurch gekennzeichnet,
daß auf dem Substrat eine Absorptionsschicht der Formel $Y_3Fe_{4,73}Co_{0,12}Si_{0,15}O_{12}$ abgeschieden wird.

15. Verfahren nach einem der vorhergehenden Ansprüche, dadurch gekennzeichnet,
daß ein Substrat der Zusammensetzung $Gd_3Ga_5O_{12}$ eingesetzt wird.

16. Verwendung des optischen Wellenleiters nach den Ansprüchen 1 bis 9 als optischer Einwegwellenleiter.

17. Verwendung des optischen Wellenleiters nach den Ansprüchen 1 bis 9 als optischer Einwegwellenleiter für den Spektralbereich $1{,}0 \leq \lambda \leq 2{,}5 \mu m$.

## Claims

1. A planar optical waveguide comprising a crystal body consisting of a non-magnetic substrate (3) having a first magneto-optical layer (7) which is epitaxially provided on the substrate and a second magneto-optical layer (9) which is epitaxially provided on the first magneto-optical layer, the two magneto-optical layers (7,9) consisting of a material based on iron garnet, the second magneto-optical layer having a refractive index $n_2$ which is approximately $1x10^{-3}$ to $1x10^{-2}$ higher than the refractive index $n_1$ of the first magneto-optical layer, characterized in that a layer (5) of a material based on iron garnet and absorbing radiation in the wavelength range of $1.0 < \lambda < 2.5$ µm is provided between the substrate (3) and the first magneto optical layer (7), said iron garnet-based layer having a refractive index $n_A$ which is higher than the refractive index of the first magneto-optical layer.

2. A planar optical waveguide as claimed in Claim 1, characterized in that the material for the magneto optical layers has a composition defined by the general formula $Y_{3-x}Pb_xFe_5O_{12}$ where x = 0.007 to 0 025 for the first magneto-optical layer (7) adjoining the absorption layer (5) and where x = 0.02 to 0.04 for the second magneto-optical layer (9) provided on the first magneto optical layer.

3. A planar optical waveguide as claimed in Claims 1 and 2, characterized in that in the material of the absorption layer (5) at least a substituent in the form of a cation which can occupy dodecahedral, octahedral and/cr tetrahedral lattice sites is present in the garnet lattice.

4. A planar optical waveguide as claimed in Claim , characterized in that the absorption layer (5) has a composition defined by the general formula $Y_3Fe_{5-x-y-z}A_xD_yM_zO_{12}$, wherein
$A = Co^{III}$,
$D = Co^{II}$,
$M = Si^{IV}$, $Ge^{IV}$, $Ti^{IV}$, $Zr^{IV}$ and/or mixtures of these ions, where

$$0 \leq x \leq 0.3$$
$$0 \leq y \leq 0.3$$
$$z \geq y$$
$$0 \leq y+z \leq 0.6$$
$$x+y+z \leq 0.6$$

$$x+y > 0$$

and where
z = O when y = O.

5. A planar optical waveguide as claimed in Claim 4, characterized in that the absorption layer (5) has a composition defined by the formula $Y_3Fe_{4.9}Co_{0.1}O_{12}$.

6. A planar optical waveguide as claimed in Claim 4, characterized in that the absorption layer (5) has a composition defined by the formula $Y_3Fe_{4.939}Co_{0.018}Ge_{0.042}O_{12}$.

7. A planar optical waveguide as claimed in Claim 4, characterized in that the absorption layer (5) has a composition defined by the formula $Y_3Fe_{4.73}Co_{0.12}Si_{0.15}O_{12}$.

8. A planar optical waveguide as claimed in any of the preceding Claims, characterized in that the absorption layer (5) has a thickness of ≦ 100 µm.

9. A planar optical waveguide as claimed in any of the preceding Claims, characterized in that the substrate (3) has a composition defined by the formula $Gd_3Ga_5O_{12}$.

**10.** A method of manufacturing a planar optical waveguide as claimed in Claims 1 to 9, characterized in that a material based on iron garnet and absorbing radiation in the wavelength range of $1.0 < \lambda < 2.5$ µm is epitaxially deposited on a non-magnetic substrate and that two magneto-optical layers having a refractive index difference n in the range of $1 \times 10^{-3}$ to $1 \times 10^{-2}$ are epitaxially deposited on said absorption layer which, by incorporation in the garnet lattice of ions absorbing radiation in the wavelength range of $1.0 \leqq \lambda \leqq 2.5$ µm and by the choice of the composition, is given a refractive index $n_A$ which is higher than the refractive index $n_1$ of the first magneto-optical layer adjoining the absorption layer.

**11.** A method as claimed in Claim 10, characterized in that an absorption layer having a compomition defined by the general formula $Y_3Fe_{5-x-y-z}A_xD_yM_zO_{12}$ is deposited on the substrate, wherein
$A = Co^{III}$,
$D = Co^{II}$,
$M = Si^{IV}$, $Ge^{IV}$, $Ti^{IV}$, $Zr^{IV}$ and/or mixtures of these ions, where

$$0 \leq x \leq 0.3$$
$$0 \leq y \leq 0.3$$
$$z \geq y$$
$$0 \leq y+z \leq 0.6$$

$$x+y+z \leq 0.6$$
$$x+y > 0$$

and where
$z = 0$ when $y = 0$.

**12.** A method as claimed in Claim 11, characterized in that an absorption layer defined by the formula $Y_3Fe_{4.9}Co_{0.1}O_{12}$ is deposited on the substrate.

**13.** A method as claimed in Claim 11, characterized in that an absorption layer defined by the formula $Y_3Fe_{4.939}Co_{0.018}Ge_{0.042}O_{12}$ is deposited on the substrate.

**14.** A method as claimed in Claim 11, characterized in that an absorption layer defined by the formula $Y_3Fe_{4.73}Co_{0.12}Si_{0.15}O_{12}$ deposited on the substrate.

**15.** A method as claimed in anyone of the preceding Claims, characterized in that a substrate of the composition $Gd_3Ga_5O_{12}$ is used.

**16.** Use of the optical waveguide claimed in Claims 1 to 9 as an optical one-way waveguide.

**17.** Use of the optical waveguide claimed in Claims 1 to 9 as an optical one-way waveguide for the spectral range of $1.0 \leqq \lambda \leqq 2.5$ µm.

## Revendications

**1.** Guide d'ondes optiques plan comportant une unité cristalline constituée par un substrat non magnétique (3) présentant une première couche magnéto-optique (7) appliquée par voie épitaxiale sur le substrat et une deuxième couche magnéto-optique (9) appliquée par voie épitaxiale sur la première couche magnéto-optique, les deux couches magnéto-optiques (7,9) étant constituées par un matériau à base de grenat de fer et la deuxième couche magnéto-optique présentant un indice de réfraction $n_2$ qui est supérieur d'un montant d'environ $1 \times 10^{-3}$ à $1 \times 10^{-2}$ à l'indice de réfraction $n_1$ de la première

couche magnéto-optique, caractérisé en ce qu'entre le substrat (3) et la première couche magnéto-optique (7) est appliquée une couche (5) absorbant le rayonnement de la gamme de longueurs d'ondes $1,0 \leq \lambda \leq 2,5$ µm constituée par un matériau à base de grenat de fer dont l'indice de réfraction $n_A$ est supérieur à celui de la première couche magnéto-optique.

**2.** Guide d'ondes optiques plan selon la revendication 1, caractérisé en ce que le matériau pour les couches magnéto-optiques présente une composition répondant à la formule générale $Y_{3-x}Pb_xFe_5O_{12}$ avec x = 0,007 à 0,025 pour la première couche confinant immédiatement à la couche d'absorption (5) et avec x = 0,02 à 0,04 pour la deuxième couche magnéto-optique (9) appliquée sur la première couche magnéto-optique.

**3.** Guide d'ondes optiques plan selon les revendications 1 et 2, caractérisé en ce que dans le matériau de la couche d'absorption (5) dans le réseau de grenat est présent au moins un substituant sous forme d'un cation pouvant occuper des sites de réseau dodécaédriques, octaédriques et/ou tétraédriques.

**4.** Guide d'ondes optiques plan selon la revendication 3, caractérisé en ce que la couche d'absorption (5) présente une composition répondant à la formule générale $Y_3Fe_{5-x-y-z}A_xD_yM_zO_{12}$, dans laquelle
A = $Co^{III}$, D = $Co^{II}$ et M = $Si^{IV}$, $Ge^{IV}$, $Ti^{IV}$, $Zr^{IV}$ et/ou des mélanges de ces ions, avec

$0 \leq x \leq 0,3;$
$0 \leq y \leq 0,3;$
$z \geq y;$
$0 \leq y + z \leq 0,6;$
$x + y + z \leq 0,6;$
$x + y > 0$

et dans laquelle
z = 0 lorsque y = 0.

**5.** Guide d'ondes optiques plan selon la revendication 4, caractérisé en ce que la couche d'absorption (5) présente une composition répondant à la formule $Y_3Fe_{4,9}Co_{0,1}O_{12}$.

**6.** Guide d'ondes optiques plan selon la revendication 4, caractérisé en ce que la couche d'absorption (5) présente une composition répondant à la formule $Y_3Fe_{4,939}Co_{0,018}Ge_{0,042}O_{12}$.

**7.** Guide d'ondes optiques plan selon la revendication 4, caractérisé en ce que la couche d'absorption (5) présente une composition répondant à la formule $Y_3Fe_{4,73}Co_{0,12}Si_{0,15}O_{12}$.

**8.** Guide d'ondes optiques plan selon l'une des revendications précédentes, caractérisé en ce que la couche d'absorption (5) présente une épaisseur de couche ≦ 100 µm.

**9.** Guide d'ondes optiques plan selon l'une des revendications précédentes, caractérisé en ce que le substrat (3) présente une composition répondant à la formule $Gd_3Ga_5O_{12}$.

**10.** Procédé pour la réalisation d'un guide d'ondes plan selon les revendications 1 à 9, caractérisé en ce que sur un substrat non magnétique est déposée par voie épitaxiale une couche en un matériau à base de grenat de fer absorbant le rayonnement de la gamme de longueurs d'ondes $1,0 \leq \lambda \leq 2,5$ µm et sur cette couche d'absorption sont déposées par voie épitaxiale deux couches magnéto-optiques présentant une différence en indice de réfraction dans la gamme de $1 \times 10^{-3}$ à $1 \times 10^{-2}$, alors que par incorporation d'ions absorbant le rayonnement de la gamme de longueurs d'ondes $1,0 \leq \lambda \leq 2,5$ µm et par choix de la composition, la couche d'absorption acquiert un indice de réfraction $n_A$ qui est supérieur à l'indice de réfraction $n_1$ de la première couche magnéto-optique confinant à la couche d'absorption.

**11.** Procédé selon la revendication 10, caractérisé en ce que sur le substrat est déposée une couche d'absorption d'une composition répondant à la formule générale $Y_3Fe_{5-x-y-z}A_xD_yM_zO_{12}$, dans laquelle
A = $Co^{III}$
D = $Co^{II}$

M = $Si^{IV}$, $Ge^{IV}$, $Ti^{IV}$, $Zr^{IV}$ et/ou des mélanges de ces ions avec

$0 \leqq x \leqq 0,3$
$0 \leqq y \leqq 0,3$
$z \geqq y$
$0 \leqq y+z \leqq 0,6$
$x+y+z \leqq 0,6$
$x+y > 0$

et dans laquelle z = 0 lorsque y = 0.

**12.** Procédé selon la revendication 11, caractérisé en ce que sur le substrat est déposée une couche d'absorption répondant à la formule $Y_3Fe_{4,9}Co_{0,1}O_{12}$.

**13.** Procédé selon la revendication 11, caractérisé en ce que sur le substrat est déposée une couche d'absorption répondant à la formule $Y_3Fe_{4,939}Co_{0,018}Ge_{0,042}O_{12}$.

**14.** Procédé selon la revendication 11, caractérisé en ce que sur le substrat est déposée une couche d'absorption répondant à la formule $Y_3Fe_{4,73}Co_{0,12}Si_{0,15}O_{12}$.

**15.** Procédé selon l'une des revendications précédentes, caractérisé par l'utilisation d'un substrat présentant la composition $Gd_3Ga_5O_{12}$.

**16.** Application du guide d'ondes optiques selon la revendication 1 à 9 comme guide d'ondes optiques unidirectionnel.

**17.** Application du guide d'ondes optiques selon la revendication 1 à 9 comme guide d'ondes optiques unidirectionnel pour la gamme spectrale $1,0 \leqq \lambda \leqq 2,5\ \mu m$.

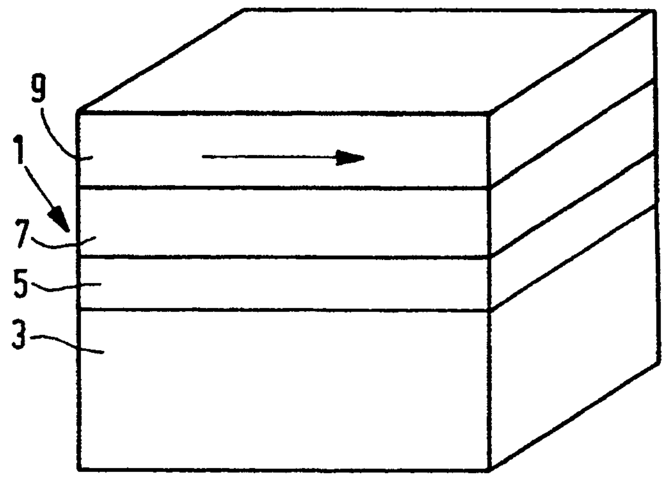


FIG.1

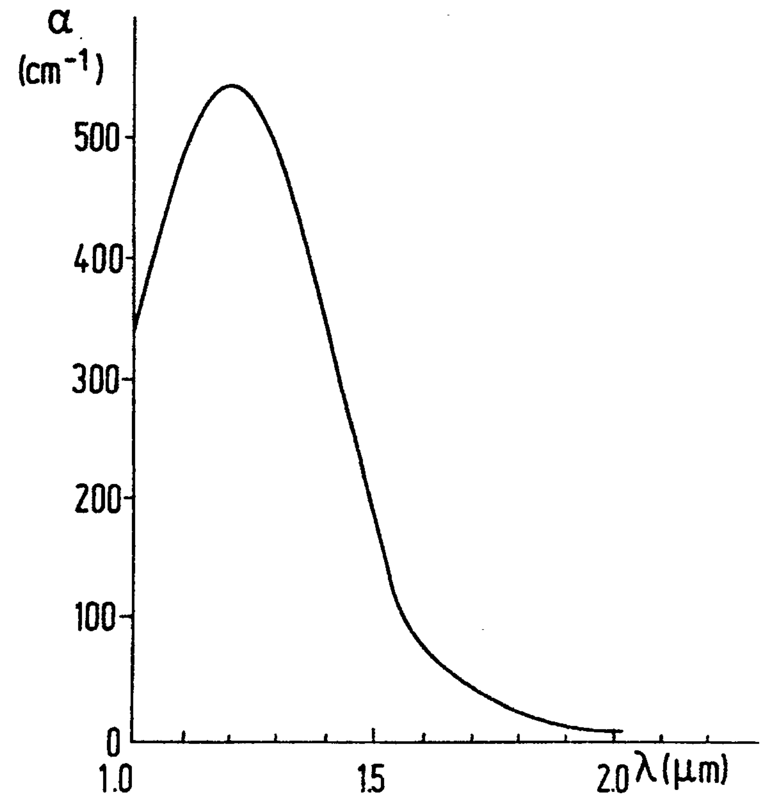


FIG.2

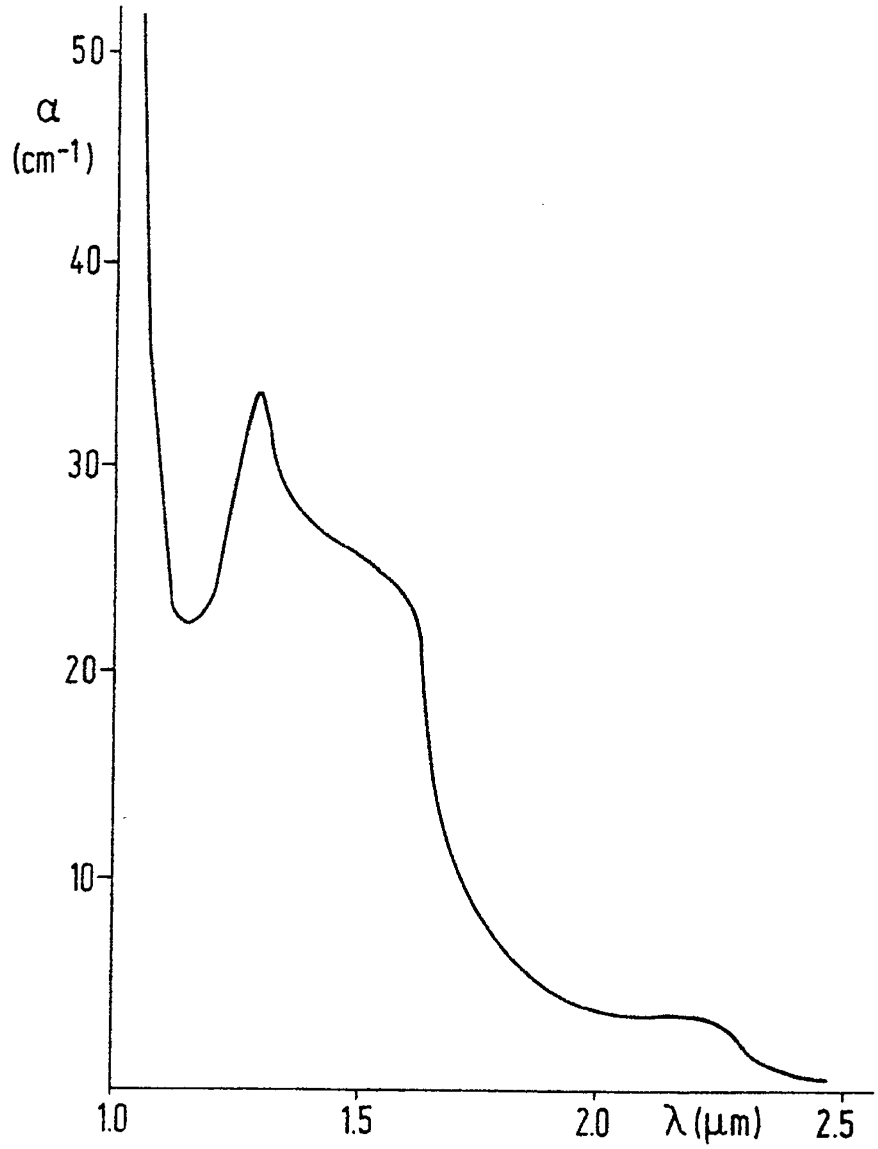


FIG. 3

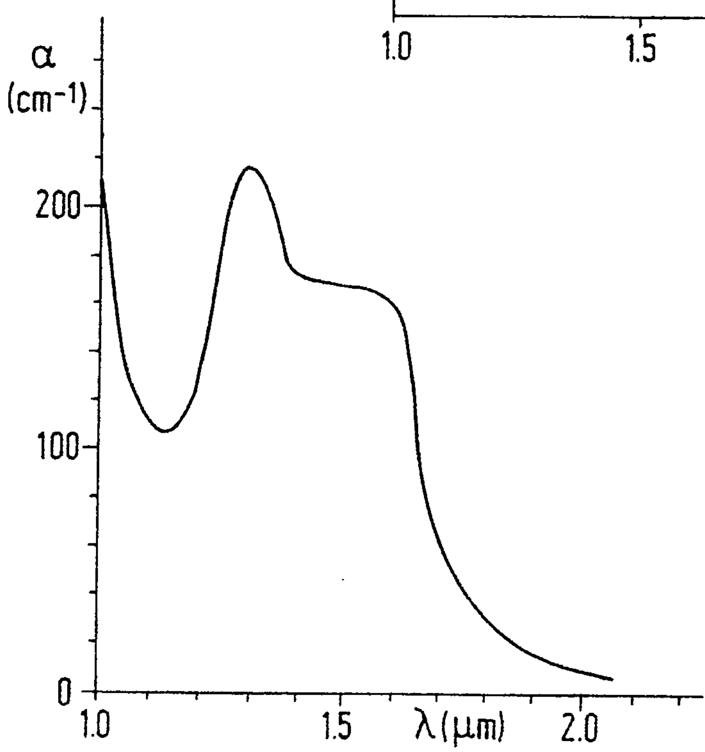


FIG. 4